# EUROPEAN PATENT APPLICATION

(11) **EP 3 527 840 A1**
(43) Date of publication of application: **21.08.2019**
(21) Application number: 18157646.3
(22) Date of filing: 20.02.2018
(51) Int. Cl.: F16D 23/06

(54) **A GEAR WHEEL**

(71) Applicant: Ningbo Geely Automobile Research & Development Co., Ltd., Ningbo, Zhejiang 315336 (CN)
(72) Inventor: Barrientos Blanco, Eva, 42135 Göteborg (SE); Budacs, Henrique, 41457 Göteborg (SE)
(74) Representative: Zacco Sweden AB

(57) **Abstract**

The invention relates to a gear wheel (1) for a transmission. The gear wheel comprises a first member (2) having a body (3) for receiving a shaft and gear teeth (4) for engagement with a further gear wheel, and a second member (5) having a ring-shaped portion (6) and teeth (7) for engagement with a rotating component. The first member (2) and the second member (5) are rotationally locked relative to each other by means of an engagement means (8) for transferring torque between the first member (2) and the second member (5). The ring-shaped portion (6) has a protrusion (9) protruding in an axial direction (30) in parallel with a rotational axis (10) of the gear wheel and the body (3) has an undercut (11) receiving the protrusion (9). At least one part (12) of the engagement means (8) is arranged on the protrusion (9) and inside the undercut (11).

## Description

### TECHNICAL FIELD

The invention relates to a gear wheel for a transmission.

### BACKGROUND

Vehicle transmissions usually have synchronizers for shifting gears. The synchronizer has a sleeve that is brought into engagement with for example a dog ring or a clutch cone of a gear wheel. The dog ring or clutch cone must be rotationally locked relative to the body of the gearwheel for transferring torque to the synchronizer.

There are several ways of connecting the dog ring or clutch cone to the gearwheel body, such as welding, splines, etc. A press fitting spline joint is a low-cost solution that can be used which enables a less complicated production process as compared to welding where many parameters have to be controlled.

A drawback of the spline joint is however that sometimes such a joint is not able to fulfil the torque transfer requirement. The packing space in a transmission is often very limited and this will also limit the size of the dog ring or clutch cone and the associated spline joint.

### SUMMARY

An objective of the invention is to provide a gear wheel for a transmission enabling an increased torque to be transferred to a synchronizer.

The objective is achieved by a gear wheel for a transmission, wherein the gear wheel comprises a first member having a body for receiving a shaft and gear teeth for engagement with a further gear wheel, and a second member having a ring-shaped portion and teeth for engagement with a rotating component, and the first member and the second member are rotationally locked relative to each other by means of an engagement means for transferring torque between the first member and the second member, and wherein the ring-shaped portion has a protrusion protruding in an axial direction in parallel with a rotational axis of the gear wheel and the body has an undercut receiving the protrusion, and at least one part of the engagement means is arranged on the protrusion and inside the undercut.

The invention is based on the insight that by such a gear wheel the length of the engagement means, a spline joint for instance, can be increased enabling increased torque to be transferred at the same time as other dimension requirements can be fulfilled since the position and the total width of the gear wheel can be unchanged.

It should however be stressed that although "spline joint" is frequently used as an example herein, the invention is also applicable to other engagement means, preferably mechanical engagement means such as interference fits, or any other suitable engagement means, the strength of which can be increased by an increased engagement length. Further, the engagement means may comprise a combination of for example splines and press fitting.

The gear wheel body is often provided with a flange onto which a dog ring or clutch cone is arranged. The flange can have external splines and the dog ring/clutch cone can have internal splines. According to one embodiment, the first member comprises a flange and the ring-shaped portion is arranged on the flange, and preferably the flange and the ring-shaped portion are connected to each other by means of the engagement means, such as a spline joint and/or an interference fit.

According to a further embodiment, the engagement means comprises a part arranged for connection of an inner radial surface of the ring-shaped portion and an outer radial surface of the body, and preferably the engagement means part arranged for connection of an inner radial surface of the ring-shaped portion and an outer radial surface of the body is arranged on the protrusion and inside the undercut. Hereby, the additional spline length can be an extension of the splines conventionally arranged between the flange and the dog ring/clutch cone.

According to another embodiment, the engagement means comprises a part arranged for connection of an outer radial surface of the ring-shaped portion and an inner radial surface of the body, and preferably the engagement means part arranged for connection of an outer radial surface of the ring-shaped portion and an inner radial surface of the body is arranged on the protrusion and inside the undercut. Hereby, the engagement means length can be increased at a further position.

According to another aspect of the invention, a further objective is to provide a transmission comprising a gear wheel enabling an increased torque to be transferred to a synchronizer.

The advantages of the transmission are substantially the same as the advantages already discussed hereinabove with reference to the different embodiments of the gear wheel. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 a is a cut side view of a gear wheel provided with a dog ring,
Fig. 1b is a side view of the gear wheel in Fig. 1a, where the gear wheel body and the dog ring has been disengaged from each other,
Fig. 1c is a front view of the gear wheel body in Fig. 1b,
Fig. 1d is a front view of the dog ring in Fig. 1b,
Fig. 2 is a side view of a clutch cone for the gear wheel body in Fig. 1b,
Fig. 3 is a variant of the gear wheel, where the dog ring has external splines and the gear wheel body internal splines,
Fig. 4 is a further variant of the gear wheel, where the dog ring has a further protrusion, and
Fig. 5 is further variant of the gear wheel, where the gear wheel body has a recess.

### DETAILED DESCRIPTION OF EXAMPLE EMBODIMENTS

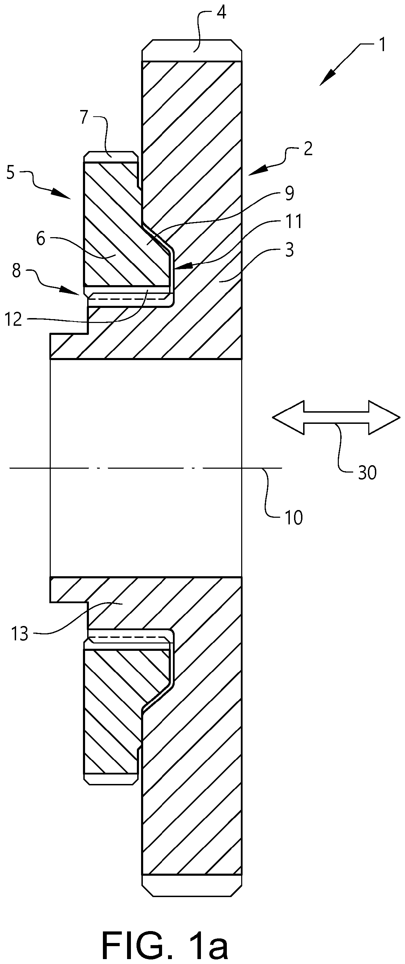

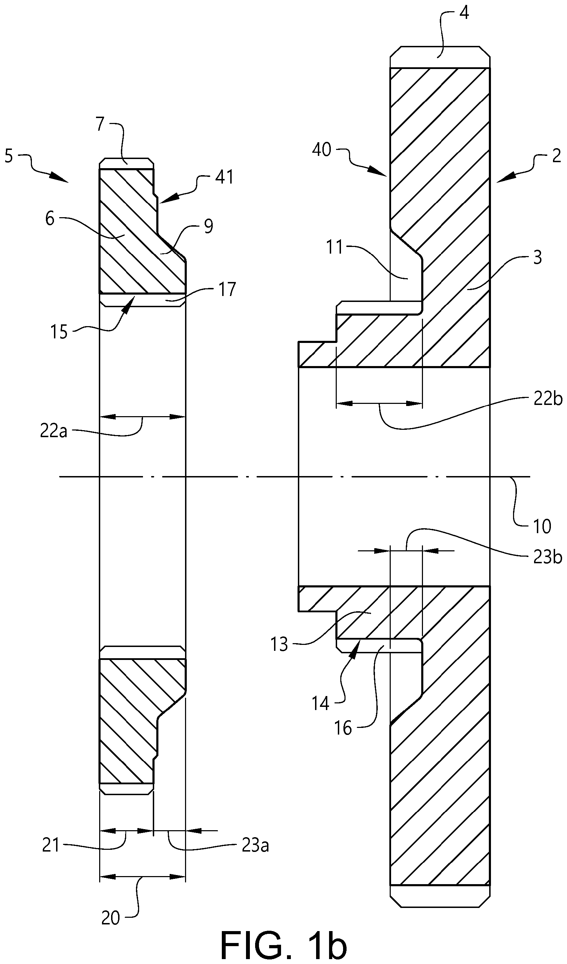

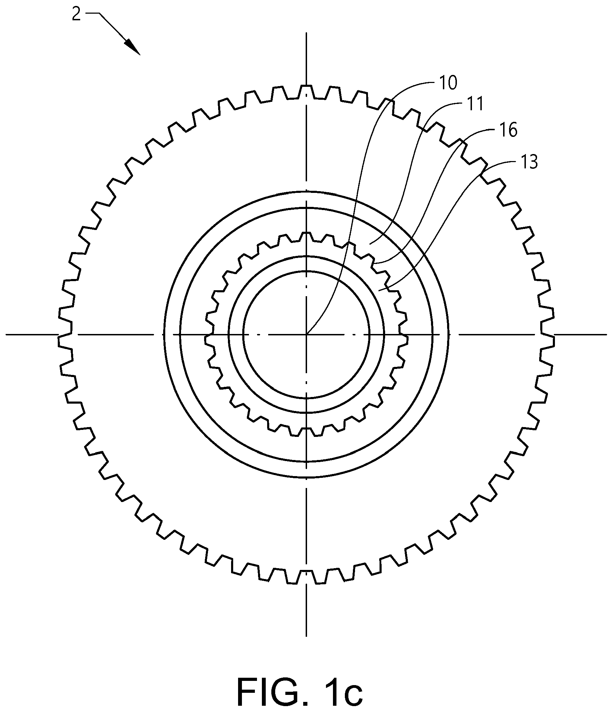

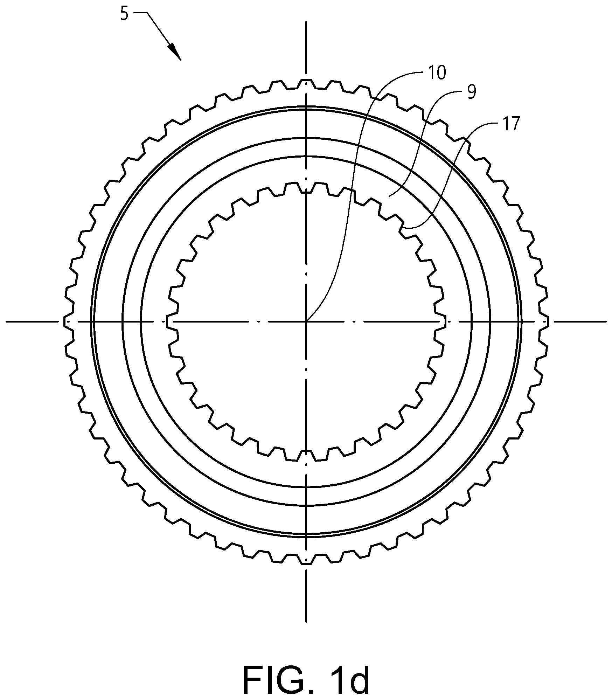

Figs. 1 a and 1 b show a gear wheel 1 for a transmission. In Fig. 1b, the gear wheel 1 is divided into two engageable parts for illustration purpose.

The gear wheel 1 comprises a first member 2 having a body 3 for receiving a shaft and gear teeth 4 for engagement with a further gear wheel (not shown). The gear wheel 1 further comprises a second member 5 having a ring-shaped portion 6 and teeth 7 for engagement with a rotating component (not shown). The first member 2 and the second member 5 are rotationally locked relative to each other by means of an engagement means 8 for transferring torque between the first member 2 and the second member 5. The ring-shaped portion 6 has a protrusion 9 protruding in an axial direction 30 in parallel with a rotational axis 10 of the gear wheel 1 and the gear wheel body 3 has an undercut 11 receiving the protrusion 9. Further, at least one part 12 of the engagement means 8 is arranged on the protrusion 9 and inside the undercut 11.

The undercut 11 receiving the protrusion 9 has an extension in the axial direction 30 in parallel with the rotational axis 10 corresponding to the length of the protrusion 9. Further, the undercut 11 preferably extends from an end surface 40 of the gear wheel body 3 which end surface 40 defines the position of the gear teeth 4, and into the gear wheel body 3. The protrusion 9 preferably extends from an end surface 41 of the ring-shaped portion 6, which end surface 41 defines the position of the second member teeth 7. When the first member 2 and the second member 5 are engaged for forming the gear wheel 1, the end surface 40 of the gear wheel body 3 and the end surface 41 of the ring-shaped portion 6 are suitably abutting or being positioned very close to each other in the axial direction 30.

The first member 2 and the second member 5 are arranged adjacent to each other with respect to the axial direction 30 in parallel with the rotational axis 10. The first member 2 suitably comprises a flange 13. The flange 13 can be ring-shaped and extend around the rotational axis 10. The ring-shaped portion 6 is preferably arranged on the flange 13 and the flange 13 and the ring-shaped portion 6 are connected to each other by means of the engagement means 8. The flange 13 has suitably an outer radial surface 14 for receiving an inner radial surface 15 of the ring-shaped portion 6 of the second member 5.

The engagement means 8 can comprise or be constituted by a spline joint. The spline joint suitably comprises external splines 16 of the flange 13 and internal splines 17 of the ring-shaped portion 6. Alternatively, or in combination, the engagement means 8 comprises or is constituted by an interference fit. In such a case, the interference fit is suitably arranged between an outer surface of the flange 13 and an inner surface of the ring-shaped portion 6.

In the example embodiment illustrated in Figs. 1a and 1b, the second member is a dog ring 5 for a synchronizer of a transmission which dog ring is provided with the protrusion 9 for additional engagement means length.

Fig. 1c shows a front view of the first member 2 and Fig. 1d shows a front view of the second member 5. As can be seen in Fig. 1d, the protrusion 9 is preferably ring-shaped and extends around the rotational axis 10. In the same way, as can be seen in Fig. 1c, the undercut 11 arranged outside the flange 13 is preferably ring-shaped and extend around the rotational axis 10.

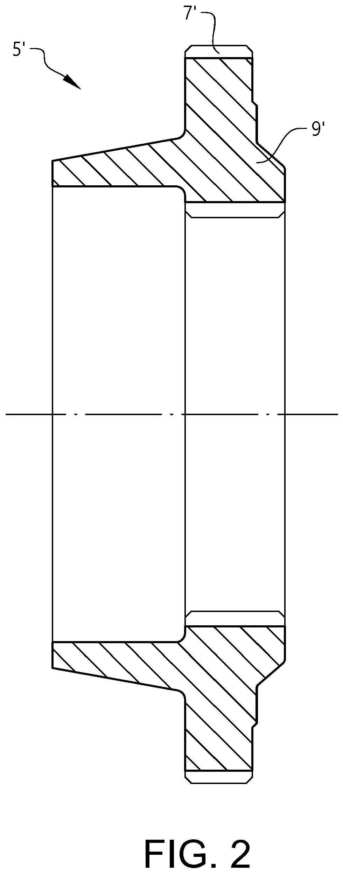

As illustrated in Fig. 2, in another example embodiment, the second member could be a clutch cone 5' for a synchronizer of a transmission which clutch cone 5' is provided with the protrusion 9' for extension of the engagement means. The clutch cone 5' illustrated in Fig. 2 can be engaged with the gear wheel body 3 illustrated in Fig. 1b for forming the gear wheel.

The teeth 7 of the dog ring 5 and the teeth 7' of the clutch cone 5' for engagement with a rotating component, such as a sleeve, are only schematically illustrated. A person skilled in the art knows how to design these teeth.

In the example embodiment illustrated in Figs. 1a-1d, the engagement means 8 comprises a part 12 arranged for connection of an inner radial surface 15 of the ring-shaped portion 6 and an outer radial surface 14 of the gear wheel body 3. This engagement means part 12 is arranged on the protrusion 9 and inside the undercut 11. In addition, the engagement means extends outside the undercut as well.

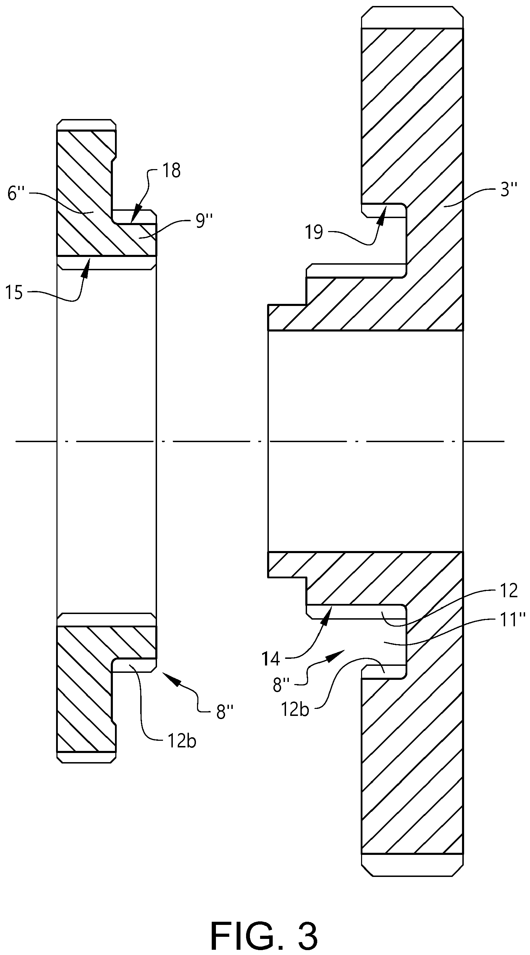

Fig. 3 shows another example embodiment of the gear wheel where the engagement means 8" comprises a part 12b arranged for connection of an outer radial surface 18 of the ring-shaped portion 6" and an inner radial surface 19 of the gear wheel body 3". This engagement means part 12b is arranged on the protrusion 9" and inside the undercut 11". For this example embodiment, the undercut 11" of the gear wheel body 3" has to be modified relative to the gear wheel body in Fig. 1a-1d. Such an engagement means part 12b can be used together with the previously described engagement means part 12 arranged for engagement of the inner radial surface 15 of the ring-shaped portion and the outer radial surface 14 of the gearwheel body.

With reference to Fig. 1b, for the example embodiments described herein, a length 20 of the second member 5 in the axial direction 30 at the protrusion 9 exceeds a length 21 of the second member teeth 7 in the axial direction 30.

Further, a length 22a of the engagement means 8 of the ring-shaped portion 6 (corresponding to a length 22b of the engagement means 8 of the gear wheel body 3) in the axial direction 30, preferably exceeds the length 21 of the second member teeth 7 in the axial direction 30. The length 22a of the engagement means 8 in the axial direction 30, can be substantially equal to the sum of the length 21 of the second member teeth 7 and a length 23a of the protrusion 9 (corresponding to a length 23b of the undercut 11) in the axial direction 30.

The length 22a of the engagement means 8 in the axial direction is preferably substantially equal to the length 20 of the ring-shaped portion 6 in the axial direction 30.

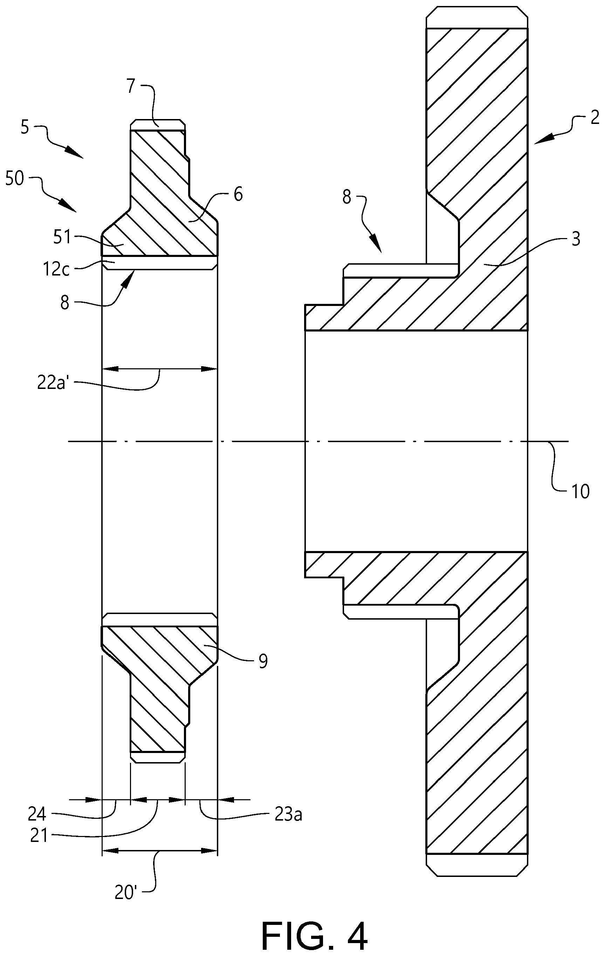

Fig. 4 shows a further example embodiment of the gear wheel, where at an end 50 of the second member 5 which end 50 is faced away from the first member 2, the ring-shaped portion 6 has a further protrusion 51 protruding in the axial direction 30. The engagement means 8 comprises a part 12c arranged on the further protrusion 51. The further protrusion 51 is preferably ring-shaped and extends around the rotational axis 10. Here, the length 22a' of the engagement means 8 in the axial direction is suitably substantially equal to the sum of the length 21 of the second member teeth 7, the length 23a of the protrusion and a length 24 of the further protrusion 51 in the axial direction 30.

The length 22a' of the engagement means 8 in the axial direction is preferably substantially equal to the length 20' of the ring-shaped portion 6 in the axial direction 30.

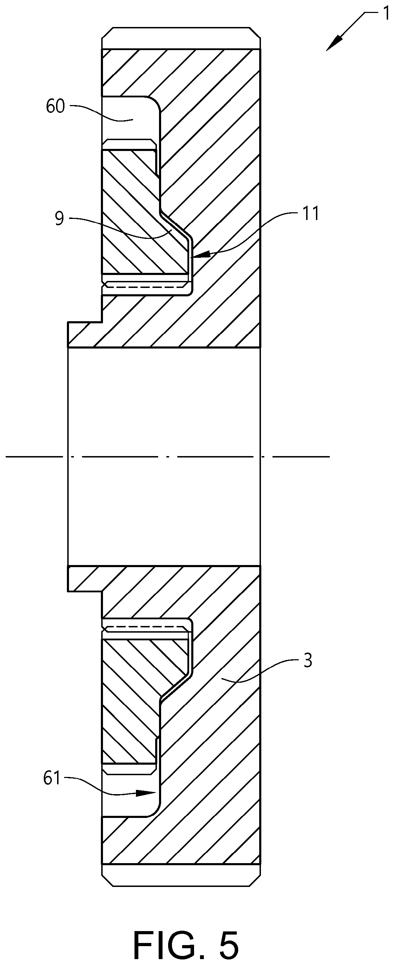

Fig. 5 shows a further example embodiment of the gear wheel 1, where gear wheel body has a recess 60, for reducing the weight of the gear wheel for instance. Here the undercut 11 receiving the protrusion 9 extends from a bottom surface 61 of the recess 60 into the gearwheel body 3.

It is to be understood that the present invention is not limited to the embodiments described above and illustrated in the drawings; rather, the skilled person will recognize that many changes and modifications may be made within the scope of the appended claims.

## Claims

1. A gear wheel (1) for a transmission, the gear wheel comprising a first member (2) having a body (3) for receiving a shaft and gear teeth (4) for engagement with a further gear wheel, and a second member (5) having a ring-shaped portion (6) and teeth (7) for engagement with a rotating component, the first member (2) and the second member (5) being rotationally locked relative to each other by means of an engagement means (8) for transferring torque between the first member (2) and the second member (5), **characterized in that** the ring-shaped portion (6) has a protrusion (9) protruding in an axial direction (30) in parallel with a rotational axis (10) of the gear wheel and the body (3) has an undercut (11) receiving the protrusion (9), and at least one part (12) of the engagement means (8) is arranged on the protrusion (9) and inside the undercut (11).

2. A gear wheel according to claim 1, **characterized in that** the engagement means (8) comprises a part (12) arranged for connection of an inner radial surface (15) of the ring-shaped portion (6) and an outer radial surface (14) of the body (3).

3. A gear wheel according to claim 2, **characterized in that** the engagement means part (12) arranged for connection of an inner radial surface (15) of the ring-shaped portion (6) and an outer radial surface (14) of the body (3) is arranged on the protrusion (9) and inside the undercut (11).

4. A gear wheel according to any of claims 1-3, **characterized in that** the engagement means (8) comprises a part (12b) arranged for connection of an outer radial surface (18) of the ring-shaped portion (6") and an inner radial surface (19) of the body (3").

5. A gear wheel according to claim 4, **characterized in that** the engagement means part (12b) arranged for connection of an outer radial surface (18) of the ring-shaped portion (6") and an inner radial surface (19) of the body (3") is arranged on the protrusion (9) and inside the undercut (11).

6. A gear wheel according to any preceding claim, **characterized in that** the first member (2) comprises a flange (13) and the ring-shaped portion (6) is arranged on the flange (13).

7. A gear wheel according to claim 6, **characterized in that** the flange (13) and the ring-shaped portion (6) are engaged to each other by means of the engagement means (8).

8. A gear wheel according to any preceding claim, **characterized in that** the engagement means (8) comprises a spline joint.

9. A gear wheel according to claim 7 and 8, **characterized in that** said spline joint comprises external splines (16) of the flange (13) and internal splines (17) of the ring-shaped portion (6).

10. A gear wheel according to any preceding claim, **characterized in that** the engagement means comprises an interference fit.

11. A gear wheel according to claim 7 and 10, **characterized in that** said interference fit is arranged between an outer surface of the flange and an inner surface of the ring-shaped portion.

12. A gear wheel according to any preceding claim, **characterized in that** a length (22a, 22b) of the engagement means (8) in the axial direction (30) exceeds a length (21) of the second member teeth (7) in the axial direction (30).

13. A gear wheel according to any preceding claim, **characterized in that** a length of the engagement means (8) in the axial direction (30) is substantially equal to the sum of a length (21) of the second member teeth (7) and a length (23a) of the protrusion (9) in the axial direction (30).

14. A gear wheel according to any preceding claim, **characterized in that** at an end (50) of the second member (5) which end is faced away from the first member (2), the ring-shaped portion (6) has a further protrusion (51) protruding in the axial direction (30), the engagement means comprising a part (12c) arranged on the further protrusion (51).

15. A gear wheel according to claim 14, **characterized in that** a length (20') of the engagement means (8) in the axial direction (30) is substantially equal to the sum of a length (21) of the second member teeth (7), a length (23a) of the protrusion (9) and a length (24) of the further protrusion (51) in the axial direction (30).

16. A gear wheel according to any preceding claim, **characterized in that** a length (22a) of the engagement means (8) in the axial direction (30) is substantially equal to a length (20) of the ring-shaped portion (6) in the axial direction (30).

17. A gear wheel according to any preceding claim, **characterized in that** a length (20) of the second member (5) in the axial direction (30) at the protrusion (9) exceeds the length (21) of the second member teeth (7) in the axial direction (30).

18. A gear wheel according to any preceding claim, **characterized in that** the second member is a dog ring (5) or a clutch cone (5') for a synchronizer of a transmission.

19. A transmission comprising a gear wheel (1) according to any preceding claim.
